# EUROPEAN PATENT SPECIFICATION

(11) **EP 2 499 781 B1**
(45) Date of publication and mention of the grant of the patent: **01.11.2017**
(21) Application number: 09851183.5
(22) Date of filing: 13.11.2009
(51) Int. Cl.: H04L 12/18, H04M 3/56

(54) **MULTIPLE PARTY COMMUNICATIONS FOR MOBILE TERMINALS**
MEHRPARTEIENKOMMUNIKATION FÜR MOBILE ENDGERÄTE
COMMUNICATIONS À PARTICIPANTS MULTIPLES POUR TERMINAUX MOBILES

(43) Date of publication of application: 19.09.2012
(73) Proprietor: Telefonaktiebolaget LM Ericsson (publ), 164 83 Stockholm (SE)
(72) Inventor: GONG, Zhenbiao, Shanghai 201210 (CN); SCHLIESSER, Roland, 52146 Würselen (DE); BRANDES, Henning, 52062 Aachen (DE)
(74) Representative: Ericsson
(86) International application number: PCT/CN2009/001254
(87) International publication number: WO 2011/057427

(56) References cited:
- WO-A1-03/039181
- WO-A1-2008/009089
- WO-A2-2004/073288
- CA-A1- 2 522 881
- CN-A- 101 102 145
- CN-A- 101 183 961
- KR-B1- 100 865 002
- US-A1- 2007 218 885

## Description

### Field of technology.

The current invention relates to a mobile communication devices connected in a mobile communication access network and the initiation of multi party communication by the mobile communication devices.

### Background

General initiation of telecommunication is towards a single party. Whether call, message or other wanted communication the mobile communication access network, and the standardization effort for that, allows such only towards one party at the time. The telecommunication network (core network) has however known features to bind for example one by one set-up calls in a single conference.
Manufacturers of terminals recognized this problem and have implemented special terminal based high end programs that take away the effort for the user of such a terminal. The user can pre-select multiple destination parties and the special program takes care of initiating one by one. Drawback of this is that a lot of "non chargeable airtime" is lost due to the extensive signaling required for each party to be connected.
Detailed background information is provided in various 3 GPP Technical specifications. Most important to name for the purpose of the described invention; messages involved in setting up a voice call TS 24.008, for messages involved in SMS transport TS 24.011 and TS 23.040, for MAP messages TS 29.002.

Also services in the core network were developed which allow a user to pre-program groups and allow for simple initiation by triggering the service with the identity of such a preprogrammed group. The service then takes care of setting up a conference or copying a SMS to multiple parties.

Another well known service is the scheduling of a conference. The user requests a conference managing service to reserve a time slot and a code. Conference details are send prior to the conference to the participants by for example e-mail. Typical details comprise organizer, number to call in, code for access to the conference and starting time duration. Apart from the upfront effort also the charging aspect must be taken care of. A participant calling in will normally bear the cost for his link. Reversal of cost requires use of toll free numbers (charged to the conference requestor) or mechanisms of reversed charging.

Thereto, WO 2004/073288 A2 discloses a system and a method for a conference call to be initiated by a communication terminal. A conference call server thereto receives an initialization request comprising a list of telephone numbers of other participants to be invited to the conference call. In response thereto, the conference call server allocates a conference call channel and an associated identifier.

Further, WO 03/039181 A1 discloses a method and a system for a conference call set-up initiated by a communication device. The initiating party transmits a message or series of messages that identify each participant by telephone number. This message is forwarded to a conference scheduler gateway that sends corresponding invitations to the participants.

From the above it is apparent that there is a need for a method and system of initiating ad-hoc communication to multiple parties having for the user the easiness as provided by the high-end terminal application but without the drawback of the extensive use of airtime for setting up the communication.

### Summary

The invention discloses a method to initiate a communication to multiple destination parties by including the multiple destination parties in a multiple destination party container, and subsequently include the container in the communication initiating message.

In first aspect it relates to a mobile terminal operational connected to a radio access network in a telecommunication network comprising the radio access network and a core network. The mobile terminal assembles the multiple destination party container from user input, includes the container in a communication initiating message and transmits the message to an access node of the core network via the radio access network.

In second aspect it relates to an access node to the core network. The access node receives the communication initiating message via the radio access network, retrieves the multiple destination party container and initializes the communication to multiple destination parties as indicated in the multiple destination party container.

In a further aspect a mobile station and an access node are disclosed, specially adapted to perform the above functions.

### List of Figures

Figure 1; basic invention
Figure 2; Layout of MDPC information element
Figure 3; maximum configuration for embodiments
Figure 4; SMS based adaptations in interface function
Figure 5; SMS based adaptation in MSC interface function for MAP SMS
Figure 6; MSC call handler adaptation
Figure 7; concatenated SMS Adaptation

### Detailed description.

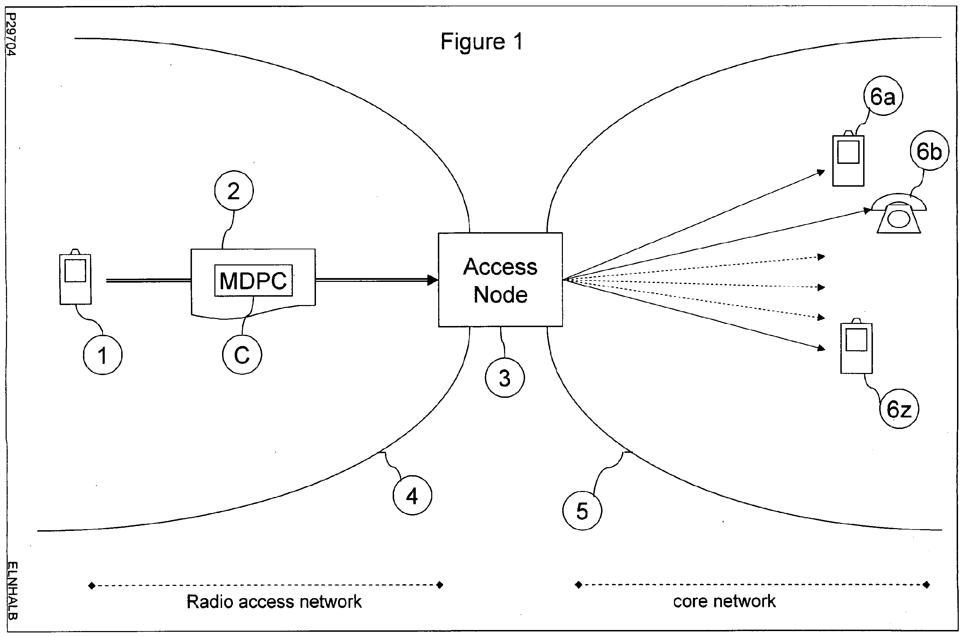

Solution for the problem identified in the background is provided, with reference to figure 1, by a mobile station 1 assembling a container 2 with all destination parties 6a to z for the multiple party communication and forwards this container to the access node 3 in a single request message. The access node 3 detects the presence of the container and initializes the communication to the multiple destination parties. The mobile station 1 is connected to the access node 3 via the radio network 4. The access node 3 sets-up the multiple communications via the core network 5.

The basic invention will be further detailed with a number of embodiments.

Conference call based on container in set-up message.

In this embodiment the mobile station initiates a conference call by including the multi destination party container in a set-up message. As outlined in background the currently standardized method is to use a SET-UP message containing an information element (IE) '5E' in which a single destination party is identified (called party BCD number).
This IE can for compatibility reasons not just be replaced by the container. For that reason a new IE (for the further description identified as example '5F') is defined containing the multi destination party container. The usage shall be compatible with access nodes to the core network which are not capable of detecting and handling the new IE '5F' and like wise access nodes enabled for the new IE '5F' shall be able to handle SET-UP messages from mobile station requesting a call set-up to a single party based on IE '5E'.
The mobile station shall therefore include also the IE '5E when using the IE '5F'. The length field of the IE '5E' shall be set to 0 and no called party number included. For an enabled access node this indicates that IE '5F' is present and that shall be used for setting up the communication. A not enabled node will return an error message back to the mobile station as no called party number is provided.
The lower transport layers of the radio network are transparent for the message contents independent of the IE's used in the messages.

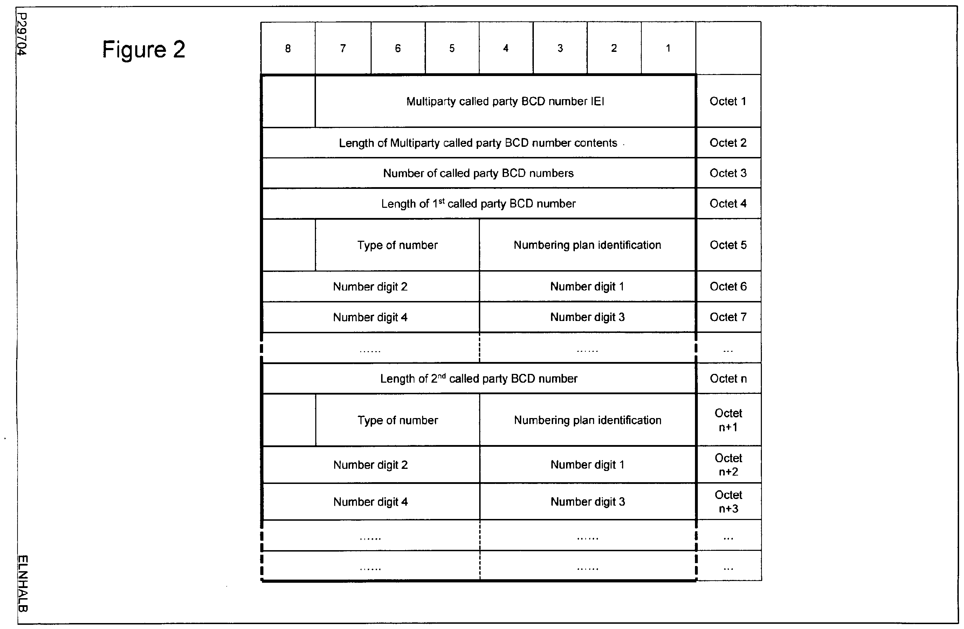

The layout of the new IE '5F' is given in figure 2. The constraints for information elements are outlined in 3GPP TS 24.007. The new IE is of the TLV type as defined in the standard. The first octet contains the information element identifier. As example value 5F is taken in this embodiment. The second octet defines the total length of the IE. This is limited to 255 octets in the example. It may however be extended to a double octet length field. The third octet as stated contains the number of destination parties included in the container. Then the destination party numbers follow one by one, each specified by one octet with the length in octets of the destination party number, one octet with the type of number and number plan indication, and the actual number in BCD (binary coded digit), two BCD numbers per octet.
It shall be understood that for the non IE type embodiments described hereafter there is more freedom in defining the layout. In that case the above described lay out is a mere example.

The mobile station assembles the IE and includes this in the set-up message. The radio network transports the message to the access node which in this case is the MSC to which the mobile station is operational connected. The MSC detects the length field of IE '5E' being 0 and checks for IE '5F' if not present an error message is returned to the mobile station. Else the MSC starts with setting up the conference call with the multiple parties identified in the IE '5F'. When the IE '5F' is used IE '6D' (additional called party information) has no meaning or will be added to each called party in IE '5F'.
Although setting up a conference call in a MSC is known art, there are some special considerations. As there is no longer a single party connection, feedback to the mobile station has to be arranged differently. The method as given below includes examples of the alternative feedback.

The MSC starts with setting up a media context to which the calling leg is attached. In order to signal the mobile station that currently no called party is attached the MSC connects a ring tone generator or an announcement machine to the media context. Typically announcement is "waiting for participants to connect". In the same time the MSC sends out the ISUP-IAM messages for each called party identified in the IE '5F'. When a first called party answers the call leg of that party is connected to the media context and the announcement is removed. As an option the MSC can play an additional announcement to the answering party telling that the party is invited to a conference call by number or other identification of the mobile station. In the same time a comparable announcement is injected to the media context that number or other identification of the answering party has connected. After playing the announcements the answering party is connected to media context. This will continue till all answering parties are connected. Parties not answering before a time out will not be connected. As an option the MSC can finally play an announcement identifying all parties not having answered. When a party disconnects also an announcement can be played to the media context identifying the disconnected party. The initiating mobile station can put the conference on hold meaning that its call leg to the conference is put on hold but that other parties still have voice contact with each other. When the mobile station disconnects either all remaining parties are disconnected or the media context is maintained for the remaining parties till the one but last called party disconnects.
Such can be set as parameter in provisioning of the MSC.
From charging point of view the latter option is less interesting as the mobile station will bear the cost of all called legs. CDR's are generated with the same call reference number for each calling leg. In the latter option the mobile station would not be in control of the cost.

Conference call based on container in SMS message.

In this embodiment the mobile station initiates a conference call by including the multi destination party container in a SMS message send prior to sending the set-up message. The format of the container maybe as defined for the new IE '5F' as stated in the first embodiment

In order to recognize the situation the '5E' is not empty (length field = 0) but the own IMSI is stated as called party number by the mobile station. Length field = 0 would mean that the MSC would search for a '5F' container. The MSC will now look for a previous received SMS with the same IMSI. Therefore the MSC has a separated storage facility for these SMS messages. The MSC sets-up and handles the conference call as described in the previous embodiment using the container in the stored SMS.

The MSC requires the SMS contents for setting-up the conference call. This means that the MSC must receive the SMS and recognize that is containing the multi destination party container and is not just a regular SMS. In order to make the SMS recognizable, the mobile station does not include an SMSC address as destination in the SMS but its own IMSI. As explained in the back ground the mobile station can send SMS messages via the MSC but also via the SGSN when having connection to that. Depending on the configuration and current access several options exist for getting the SMS to the MSC.

In the first case the mobile station is capable of selecting whether the SMS is send to the MSC or the SGSN (or currently no connection to the SGSN is available). In this case the MSC receives the SMS. As explained the MSC has not a transport layer as normal operation would be direct forwarding to a SMSC. The MSC has however an interface function that receives the SMS via the radio link layer and forwards via the MAP interface. This link interface is adapted to recognize that the SMSC address is equal to the IMSI of the mobile station sending the SMS. In that case the SMS is not forwarded to a SMSC but stored in the storage facility for multi destination party containers.

In the second case the mobile station has connection to a SGSN and will try to send the SMS via the SGSN. Like wise the SGSN has no transport layer function but an interface function as the MSC. The interface function recognizes the SMSC address to be an IMSI equal to the sending mobile station. The interface function reacts by sending a not supported error back to the mobile station (error #69, not supported service). The standard reaction of the mobile station is then to retry sending the SMS to the MSC. The MSC receives and handles as in the first case.

In the third case the SMS is received by the SGSN and the link interface recognizes the SMSC address being the IMSI of the sending mobile station. No error message is produced but the interface function uses the same MAP-MO-FORWARD-SMS as it would use towards the SMSC in normal SMS cases. The interface function uses however not the destination field (which normally would contain the SMSC address) but uses the global title of the own VMSCs (or direct single address of an own VMSC) covering the same area. The MSC receives the SMS and acts as in the 2 previous cases.

Group SMS based on a container in first SMS

In this embodiment the mobile station initiates a communication to multi destination parties by SMS. As in the second embodiment the mobile station sends first an SMS including the container having its own IMSI as SMSC address and having a called party information element also containing the IMSI.
The layout of the container may again be as defined in the first embodiment. After that the actual SMS is send as a single SMS or a concatenation of SMS messages. All of them having the SMSC address being the own IMSI. As the SMSC address it self must be known the called party Information element inside the SMS contains the actual SMSC address to be used.

The MSC receives the SMS with the container and stores that. Then the second SMS (or concatenation of SMS) is received. As it comes from the same source, being the IMSI of a mobile station as is already stored, it is recognized as the actual SMS to be copied and send to the multiple parties as indicated in the stored container. The MSC therefore replaces the called party information element in each copy with a destination from the container and forwards to the SMSC as originally indicated in the called party field.

As the previous embodiment some different cases can exist; Where the mobile station can select the MSC or there is currently no SGSN connection the SMS messages will be received by the MSC.
If there is connection to a SGSN, the interface function can produce a 'not supported' error so that the SMS messages go to the MSC or the SGSN can forward to the MSC via the MAP connection.

Group SMS based on new information element.

This embodiment is comparable to the first embodiment only now applied to SMS. The mobile station includes the called party information element with length field = 0, and adds a multi destination party container as new defined information element. The layout of this information element is identical to that of the first embodiment. The SMS message, or concatenation of SMS messages, is send by the mobile station. The actual multiplication of the SMS message can be handled in MSC, SGSN or the SMSC. The MSC and SGSN cases are similar to the second embodiment. It requires that the interface function in MSC or SGSN is capable of detecting a called party IE with length = 0. It is therefore required that interface function inspects the actual contents of a received SMS and if a container is present then copy the SMS for each intended recipient, remove the container and add the intended recipient in the called party IE.

The SGSN has the option to produce an error or transport via MAP to the MSC so that copy and replacement are performed in the MSC. These are however less efficient in the case of a SMS. Alternative is that the SMS is transferred transparently by either MSC or SGSN to the indicated SMSC and that the SMSC detects the presence of the container and performs the copy and replace and subsequent forwards to intended recipients.

Group SMS based on container in last SMS of a concatenated SMS

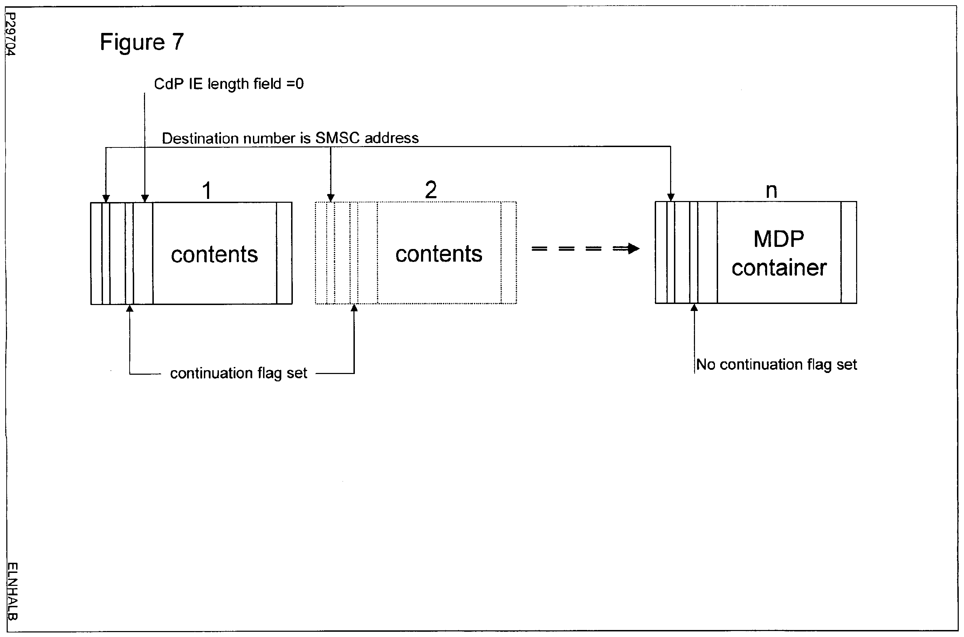

In this embodiment the mobile station extends the SMS message or concatenation of SMS messages with one additional SMS message containing the multi destination party container so forming a new concatenated SMS. This is outlined in figure 7. In all it is an alternative to the previous embodiment. There is no need for a new defined information element but the total length of the container is limited to the size of one SMS message. The interface function recognizes on called party length field = 0 and the fact that the SMSC address is not the own IMSI of the mobile station sending that the last SMS of the concatenation contains the address container. The interface function copies and replaces as in the previous embodiment. Without further adjustment each copy contains at the end the container which will be displayed as normal information with the rest of the message at the destination terminal as recipient list when the receiving terminal is adapted for this.

### SGSN and V-MSC implementation

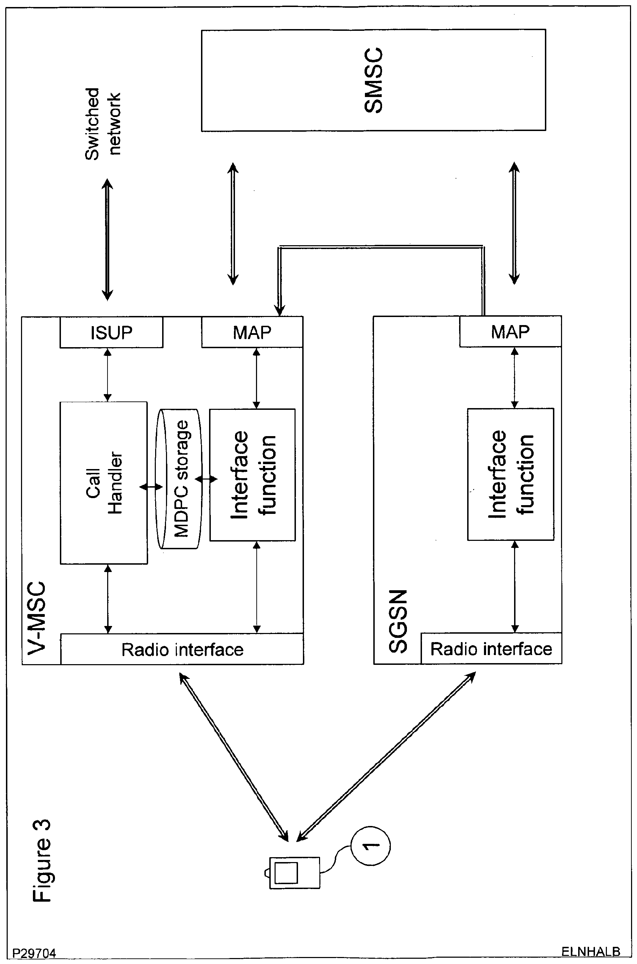

Figure 3 outlines a maximum configuration capable of handling all the embodiments described. As stated earlier the mobile station 1 may have connection to either or both of the MSC and SGSN. The MSC connected to is mostly denoted as V-MSC (visiting MSC).

SMS messages are transported between mobile station and the MSC or SGSN via the radio interface. This interface has several layers where the application layer is the highest. The application layer is supported by the transport layer, which is supported by the relay layer, which is supported by the connection layer, which is finally supported by the basic radio protocols. For a detailed view reference should be made to the describing standard 3GPP TS 24.008 and TS 24.0011.
Between the MSC or SGSN and the SMSC messages are transported using the MAP interface. The current standards have not defined the presence of a transport layer and application layer in the MSC or SGSN. Instead an interface function is identified. The interface function receives RP (relay layer protocol) data containers from the Relay layer, containing mobile station originating SMS messages, unpacks these and uses the elements to reassemble MAP messages. Main reason is to leave the transport level addresses and high level error reporting unchanged. Typically these will be changed inside a transport layer. For terminating SMS messages towards the mobile station the process works reverse.

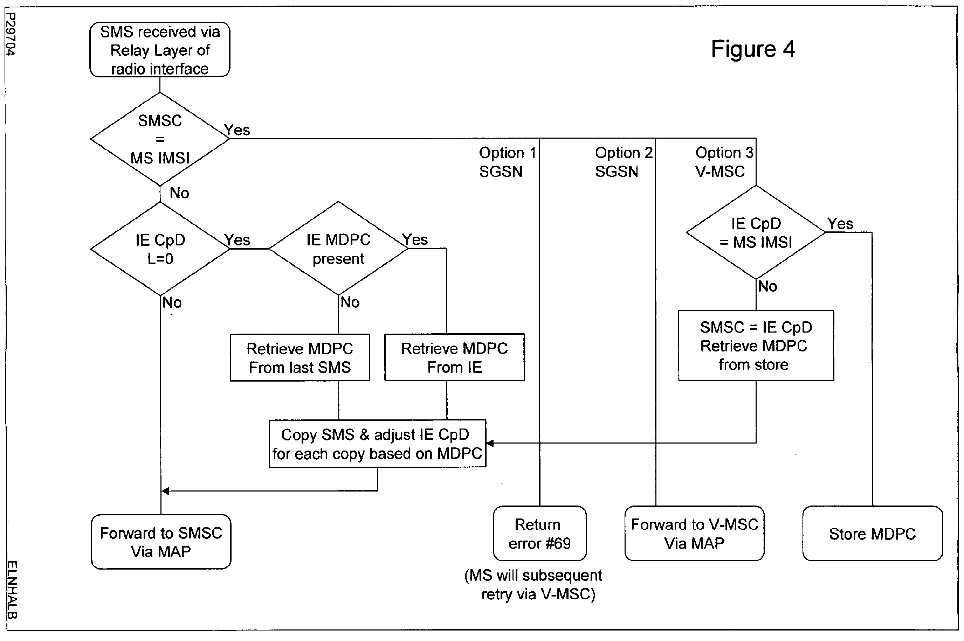

The implementation of the SMS part of stated embodiments is made by special adaptations in the interface function. Figure 4 outlines these additional functions. It shall be noted that this is a maximum configuration capable of handling all embodiments stated.
After having the received RP data container unpacked the interface function first checks if the SMSC address stated might be equal to the stated IMSI of the mobile station sending the RP data container. In that case the SMS is intended to be used for multiple party communication set-up. When not the IMSI of the mobile station a second test checks if the information element containing the called party number has a length field =0. In that case the SMS requires copying and including of called party numbers as contained in a MDPC. If both test are negative it is a regular SMS. The interface function assembles the MAP message and forwards to the SMSC as indicated by the mobile station.

If the first test is positive the interface function in the access node has 3 options. If the access node is a SGSN then it can return a #69 error back to the Mobile station indicating not supported service. If the access node is a SGSN then the second alternative is to assemble a MAP message but for ward to the V-MSC instead of the SMSC. The third option if the access node is a MSC is to check if the information element called party is equal to the IMSI of the sending mobile station. If that is the case the MDPC is retrieved and stored in the MDPC store of the MSC. If not the mobile station IMSI it is assumed to be the SMSC address and the SMS was intended for multi party communication. The interface function then retrieves the MDPC from the store identified by the IMSI of the SMS sending mobile. The original information element called party is saved as SMSC address and subsequently used as destination in the copies of the SMS. The original called party IEs in the copies are replaced by the party numbers as identified in the MDPC. Each copy is subsequently assembled in a MAP message and forwarded to the indicated SMSC.

If the second test is positive the unpacked RP data container is checked if an MDPC information element is present. If this is the case the MDPC is retrieved from that. Else the MDPC is retrieved from the last SMS of a concatenated set of SMS messages. The latter requires the interface function to receive all SMS messages belonging to the concatenation before handling them. In either case the MDPC contents is used for inclusion in the called party IE in the copies of the SMS. The copies are assembled in MAP messages and forwarded to the SMSC as indicated by the sending mobile station.

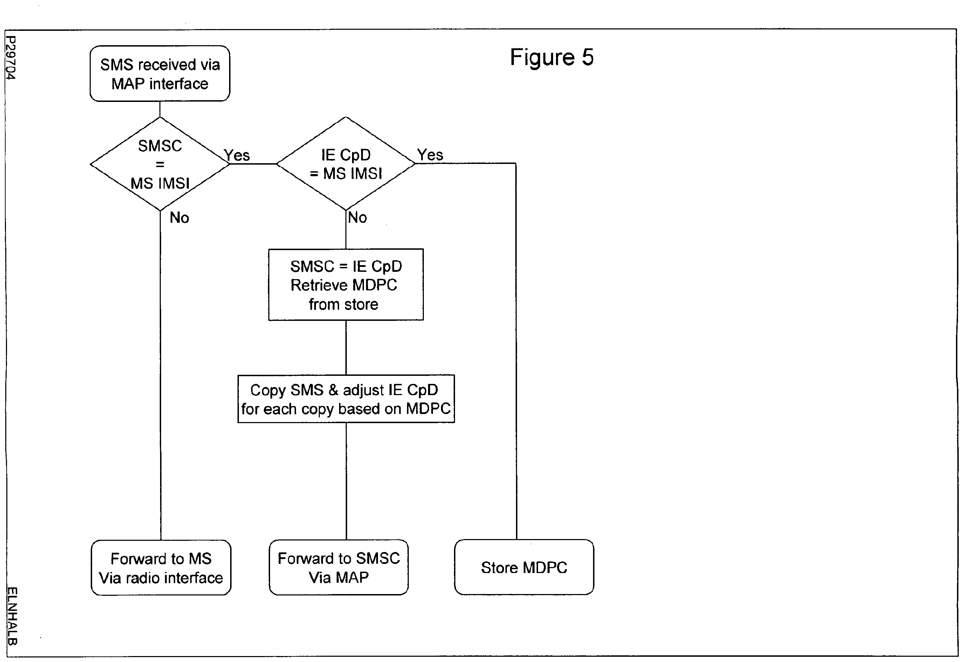

In case the access node is a MSC it can also receive SMS messages via the MAP interface. Normally these would be terminating SMS messages for the mobile station. The interface function is further adapted, see figure 5, that after unpacking the MAP messages a check is made if the SMSC address is the IMSI of the mobile station. If not it is a normal SMS that need to be packed in a RP data container for further transportation to the mobile station. If the test was positive a second test is made if the called party number information element equals the IMSI of the mobile station. If that is the case the MDPC is retrieved and stored in the MSC MDPC store. Else it is a SMS for multiple party communication. The called party number information element contains the SMSC address which is saved. Then the SMS is copied and the called party information element in each copy is replaced by a called party from the MDPC. The SMSC address is changed to the saved SMSC address. The copies are assembled in MAP messages and forwarded as mobile originating SMS messages to the SMSC as indicated by the mobile station.

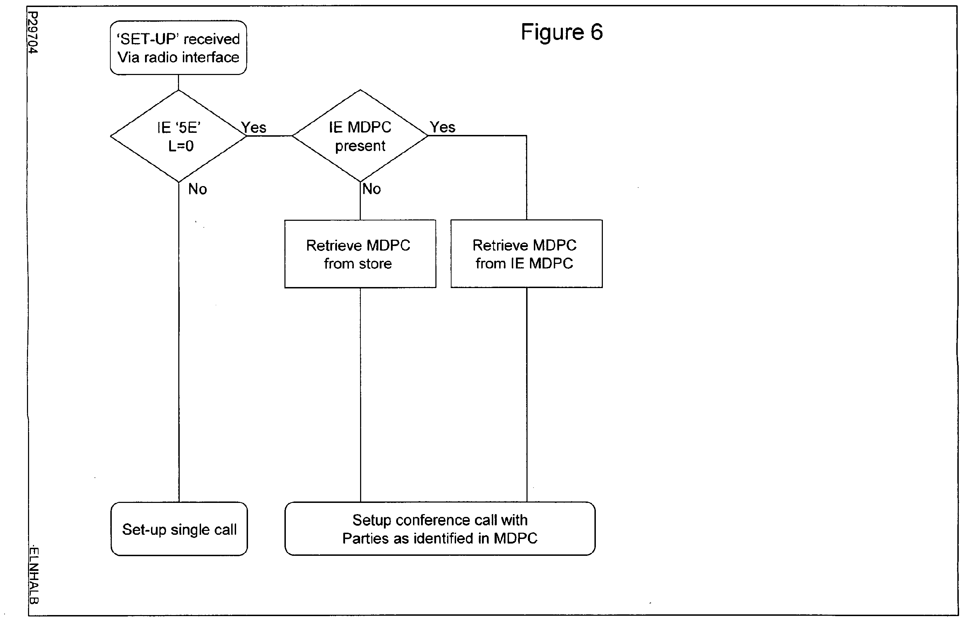

In case of a call set-up message this is only received at the MSC. The standard MSC has a call handler that will build the connection by issuing an ISUP message into the core network. The actual voice connection is made via a media gateway controlled by the call handler. Normally a set-up received at the call handler will result in setting up a single connection with a called party. For enabling the embodiments the call handler has been adapted with additional functions, see figure 6. After having received the set-up message the call handler first checks if the information element 5E (called party number) has a length field = 0 in that case the set-up is intended fro multi party call set-up (conference call).
If positive a second check is made if the MDPC information element is present (example 5F). If this check is positive the MDPC is retrieved from this IE. Else the MDPC is retrieved from the MDPC store based on the IMSI of the call requesting mobile station. The call handler then uses the MDPC to set-up a conference call to the parties as identified in the MDPC.

Although the invention is described with a few dedicated examples, it will be apparent to a person skilled in the art that the basic principle of adding a multi destination party container might be used in various situations where a mobile station wants to initiate communication to multiple parties.

**List of abbreviations**

| | | |
|---|---|---|
| 3GPP | 3^{rd} Generation Partnership Project | [Standardization body] |
| BCD | Binary Coded Digit | |
| GPRS | General Packet Radio Service | [Mobile network technology] |
| IE | Information Element | [Telecom message component] |
| IMSI | International Mobile Subscriber Identity | [SS7 address type] |
| ISDN | International Subscriber Directory Number | [SS7 address type] |
| ISUP | ISDN User Part | [SS7 Telecommunication protocol] |
| ISUP-IAM | ISUP Initial Address Message | [ISUP message] |
| SS7 | Signalling System nr.7 | [Telecom network subsystem] |
| MSC | Mobile service Switching Centre | [Telecom network node] |
| MAP | Mobile Application Part | [SS7 Telecommunication protocol] |
| V-MSC | Visiting MSC | [Telecom network node] |
| SGSN | Supporting GPRS Service Node | [Telecom network node] |
| SMS | Short Message Service | [Telecom network service] |
| SMSC | Short Message Service Centre | [Telecom network node] |

## Claims

1. Method for an access node (3) of a core network (5) of a telecommunication network comprising a radio access network (4) and said core network, performing the step of:
• Receiving via said radio network a communication initializing message (2) including a multi destination party container (C),
**characterized by** the step of:
• Setting up a communication to multiple destination parties (6a - 6z) indicated in said multi destination party container.

2. Method of claim 1, where said message is a call set-up message.

3. Method of claim 1, where said message is a Short Message Service message.

4. Method of claim 1, where said multi destination party container is an Information Element of said message.

5. Method of claim 1, where said multi destination party container comprises a parameter specifying a number of destination parties included in said multi destination party container

6. Method of claim 1, where said multi destination party container comprises at least one destination party identified by a called party number in Binary Coded Digits.

7. Method of claim 1, where said access node is a Mobile service Switching Centre (MSC) or a Supporting GPRS Service Node (SGSN).

8. Method of claim 7, further **characterized by** the step of forwarding said communication initializing message to said Mobile service Switching Centre by said Supporting GPRS Service Node.

9. An access node (3) adapted to be employed in a core network (5) of a telecommunication network comprising a radio access network (4) and said core network, comprising:
• A radio interface for receiving via said radio network a communication initializing message (2) including a multi destination party container (C),
**characterized by** comprising:
• An interface function adapted for setting up a communication to multiple destination parties (6a - 6z) indicated in said multi destination party container.

10. An access node (3) of the preceding claim, further comprising a Mobile Application Part (MAP) interface for sending and receiving MAP messages, wherein the interface function is connected to said radio interface and said MAP interface, and adapted to retrieve the multi destination party container from the message received via said radio interface and to initialize a communication to the multiple destination parties indicated in said multi destination party container via said MAP interface.

11. An access node (3) according to claim 10, being realized as a Mobile service Switching Centre or a Supporting GPRS Service Node.

12. An access node (3) according to claim 11, being realized as a Supporting GPRS Service Node (SGSN) having a Interface function adapted to initialize said communication to multiple communication parties by forward said message received via said radio interface to a Mobile service Switching Centre (MSC) via said MAP interface.

13. An access node (3) according to claim 11, being realized as a Mobile service Switching Centre (MSC) having a storage facility for storing multi destination party containers.

14. An access node (3) according to claim 11, being realized as a Mobile service Switching Centre (MSC) having an ISDN user part (ISUP) interface having a call handler connected to said radio interface, adapted to retrieve a multi destination party container from a message received via said radio interface and initializing a communication to multiple destination parties indicated in said multi destination party container via said ISUP interface.

15. An access node (3) according to claim 13, wherein said interface function is connected to said storage facility for storing multi destination party containers, and is further adapted to retrieve from a message received via the MAP interface a multi destination party container and store the multi destination party container in the storage facility.

16. An access node (3) according to claim 15, having an ISDN user part (ISUP) interface, comprising a call handler connected to said radio interface, said storage facility and said ISUP interface, adapted to receive a message for initializing a communication to multiple destination parties, retrieve a multi destination party container from said storage facility corresponding to said received message and initializing communication to multiple destination parties indicated in said multi destination party container via said ISUP interface.

## Patentansprüche

1. Verfahren für einen Zugangsknoten (3) eines Kernnetzes (5) eines Telekommunikationsnetzes, das ein Funkzugangsnetz (4) und das Kernnetz umfasst, zum Ausführen des folgenden Schrittes:
• Empfangen, über das Funknetz, einer Kommunikationsinitialisierungsnachricht (2), die einen Multi Destination Party-Container (C) enthält,
**gekennzeichnet durch** folgenden Schritt:
• Einrichten einer Kommunikation mit mehreren Zielort-Parteien (6a - 6z), die in dem Multi Destination Party-Container angegeben sind.

2. Verfahren nach Anspruch 1, wobei die Nachricht eine Rufaufbaunachricht ist.

3. Verfahren nach Anspruch 1, wobei die Nachricht eine Short Message Service-Nachricht ist.

4. Verfahren nach Anspruch 1, wo der Multi Destination Party-Container ein Informationselement der Nachricht ist.

5. Verfahren nach Anspruch 1, wobei der Multi Destination Party-Container einen Parameter umfasst, der eine Anzahl von Zielort-Parteien spezifiziert, die in dem Multi Destination Party-Container enthalten sind.

6. Verfahren nach Anspruch 1, wobei der Multi Destination Party-Container mindestens eine Zielort-Partei umfasst, die durch eine Called-Party-Nummer in Binären Codierten Ziffern identifiziert wird.

7. Verfahren nach Anspruch 1, wobei der Zugangsknoten ein Mobile Service Switching Centre (MSC) oder ein Supporting GPRS Service Node (SGSN) ist.

8. Verfahren nach Anspruch 7, das des Weiteren durch den Schritt des Weiterleitens der Kommunikationsinitialisierungsnachricht an das Mobile Service Switching Centre durch den Supporting GPRS Service Node gekennzeichnet ist.

9. Zugangsknoten (3), der dafür ausgelegt ist, in einem Kernnetz (5) eines Telekommunikationsnetzes verwendet zu werden, das ein Funkzugangsnetz (4) und das Kernnetz umfasst, der Folgendes umfasst:
• eine Funkschnittstelle zum Empfangen, über das Funknetz, einer Kommunikationsinitialisierungsnachricht (2), die einen Multi Destination Party-Container (C) enthält,
**dadurch gekennzeichnet, dass** er Folgendes umfasst:
• eine Schnittstellenfunktion, die dafür ausgelegt ist, eine Kommunikation mit mehreren Zielort-Parteien (6a - 6z) einzurichten, die in dem Multi Destination Party-Container angegeben sind.

10. Zugangsknoten (3) des vorangehenden Anspruchs, der des Weiteren eine Mobile Application Part (MAP)-Schnittstelle zum Senden und Empfangen von MAP-Nachrichten umfasst, wobei die Schnittstellenfunktion mit der Funkschnittstelle und der MAP-Schnittstelle verbunden ist und dafür ausgelegt ist, den Multi Destination Party-Container aus der Nachricht abzurufen, die über die Funkschnittstelle empfangen wurde, und eine Kommunikation mit den mehreren Zielort-Parteien, die in dem Multi Destination Party-Container angegeben sind, über die MAP-Schnittstelle zu initialisieren.

11. Zugangsknoten (3) nach Anspruch 10, der als ein Mobile Service Switching Centre oder ein Supporting GPRS Service Node realisiert ist.

12. Zugangsknoten (3) nach Anspruch 11, der als ein Supporting GPRS Service Node (SGSN) realisiert ist, der eine Schnittstellenfunktion aufweist, die dafür ausgelegt ist, die Kommunikation mit mehreren Kommunikationsparteien zu initialisieren, indem die über die Funkschnittstelle empfangene Nachricht über die MAP-Schnittstelle an ein Mobile Service Switching Centre (MSC) weitergeleitet wird.

13. Zugangsknoten (3) nach Anspruch 11, der als ein Mobile Service Switching Centre (MSC) realisiert ist, das eine Speichereinrichtung zum Speichern von Multi Destination Party-Containern aufweist.

14. Zugangsknoten (3) nach Anspruch 11, der als ein Mobile Service Switching Centre (MSC) realisiert ist, das eine ISDN User Part (ISUP)-Schnittstelle aufweist, die einen Call-Handler aufweist, der mit der Funkschnittstelle verbunden ist, der dafür ausgelegt ist, einen Multi Destination Party-Container aus einer Nachricht abzurufen, die über die Funkschnittstelle empfangen wurde, und eine Kommunikation mit mehreren Zielort-Parteien, die in dem Multi Destination Party-Container angegeben sind, über die ISUP-Schnittstelle zu initialisieren.

15. Zugangsknoten (3) nach Anspruch 13, wobei die Schnittstellenfunktion mit der Speichereinrichtung zum Speichern von Multi Destination Party-Containern verbunden ist, und des Weiteren dafür ausgelegt ist, aus einer Nachricht, die über die MAP-Schnittstelle empfangen wurde, einen Multi Destination Party-Container abzurufen und den Multi Destination Party-Container in der Speichereinrichtung zu speichern.

16. Zugangsknoten (3) nach Anspruch 15, der eine ISDN User Part (ISUP)-Schnittstelle aufweist, die einen Call-Handler umfasst, der mit der Funkschnittstelle, der Speichereinrichtung und der ISUP-Schnittstelle verbunden ist, der dafür ausgelegt ist, eine Nachricht zum Initialisieren einer Kommunikation mit mehreren Zielort-Parteien zu empfangen, einen Multi Destination Party-Container aus der Speichereinrichtung abzurufen, welcher der empfangenen Nachricht entspricht, und eine Kommunikation mit mehreren Zielort-Parteien, die in dem Multi Destination Party-Container angegeben sind, über die ISUP-Schnittstelle zu initialisieren.

## Revendications

1. Procédé pour un noeud d'accès (3) d'un réseau central (5) d'un réseau de télécommunications comprenant un réseau d'accès radio (4) et ledit réseau central, effectuant l'étape de :
• la réception, par l'intermédiaire dudit réseau radio, d'un message d'initialisation de communication (2) comprenant un contenant de participants de destination multiples (C),
**caractérisé par** l'étape de :
• l'établissement d'une communication avec des participants de destination multiples (6a-6z) indiqués dans ledit contenant de participants de destination multiples.

2. Procédé selon la revendication 1, dans lequel ledit message est un message d'établissement d'appel.

3. Procédé selon la revendication 1, dans lequel ledit message est un message de service de messages courts, SMS.

4. Procédé selon la revendication 1, dans lequel ledit contenant de participants de destination multiples est un élément d'information dudit message.

5. Procédé selon la revendication 1, dans lequel ledit contenant de participants de destination multiples comprend un paramètre spécifiant un nombre de participants de destination inclus dans ledit contenant de participants de destination multiples.

6. Procédé selon la revendication 1, dans lequel ledit contenant de participants de destination multiples comprend au moins un participant de destination identifié par un numéro de participant appelé à chiffres codés binaires.

7. Procédé selon la revendication 1, dans lequel ledit noeud d'accès est un centre de commutation de services mobiles (MSC) ou un noeud de services de prise en charge de GPRS (SGSN).

8. Procédé selon la revendication 7, **caractérisé en outre par** l'étape du transfert dudit message d'initialisation de communication au dit centre de commutation de services mobiles par ledit noeud de services de prise en charge de GPRS.

9. Noeud d'accès (3) apte à être employé dans un réseau central (5) d'un réseau de télécommunications comprenant un réseau d'accès radio (4) et ledit réseau central, comprenant :
• une interface radio pour effectuer la réception, par l'intermédiaire dudit réseau radio, d'un message d'initialisation de communication (2) comprenant un contenant de participants de destination multiples (C),
**caractérisé en ce qu'**il comprend :
• une fonction d'interface apte à effectuer l'établissement d'une communication avec des participants de destination multiples (6a-6z) indiqués dans ledit contenant de participants de destination multiples.

10. Noeud d'accès (3) selon la revendication précédente, comprenant en outre une interface de partie d'application mobile (MAP) pour l'envoi et la réception de messages MAP, dans lequel la fonction d'interface est reliée à ladite interface radio et à ladite interface MAP, et est apte à récupérer le contenant de participants de destination multiples depuis le message reçu par l'intermédiaire de ladite interface radio et à initialiser une communication avec les participants de destination multiples indiqués dans ledit contenant de participants de destination multiples par l'intermédiaire de ladite interface MAP.

11. Noeud d'accès (3) selon la revendication 10, réalisé en tant que centre de commutation de services mobiles ou en tant que noeud de services de prise en charge de GPRS.

12. Noeud d'accès (3) selon la revendication 11, réalisé en tant que noeud de services de prise en charge de GPRS (SGSN) comportant une fonction d'interface apte à initialiser ladite communication avec des participants de communication multiples par le transfert dudit message reçu par l'intermédiaire de ladite interface radio à un centre de commutation de services mobiles (MSC) par l'intermédiaire de ladite interface MAP.

13. Noeud d'accès (3) selon la revendication 11, réalisé en tant que centre de commutation de services mobiles (MSC) comportant un dispositif de mémorisation pour mémoriser des contenants de participants de destination multiples.

14. Noeud d'accès (3) selon la revendication 11, réalisé en tant que centre de commutation de services mobiles (MSC) comportant une interface de partie d'utilisateur ISDN (ISUP) comportant un gestionnaire d'appel relié à ladite interface radio, apte à récupérer un contenant de participants de destination multiples depuis un message reçu par l'intermédiaire de ladite interface radio et à initialiser une communication avec des participants de destination multiples indiqués dans ledit contenant de participants de destination multiples par l'intermédiaire de ladite interface ISUP.

15. Noeud d'accès (3) selon la revendication 13, dans lequel ladite fonction d'interface est reliée au dit dispositif de mémorisation pour mémoriser des contenants de participants de destination multiples, et est en outre apte à récupérer, depuis un message reçu par l'intermédiaire de l'interface MAP, un contenant de participants de destination multiples et à mémoriser le contenant de participants de destination multiples dans le dispositif de mémorisation.

16. Noeud d'accès (3) selon la revendication 15, comportant une interface de partie d'utilisateur ISDN (ISUP), comprenant un gestionnaire d'appel relié à ladite interface radio, au dit dispositif de mémorisation et à ladite interface ISUP, apte à recevoir un message pour initialiser une communication avec des participants de destination multiples, à récupérer un contenant de participants de destination multiples depuis ledit dispositif de mémorisation correspondant au dit message reçu et à initialiser une communication avec des participants de destination multiples indiqués dans ledit contenant de participants de destination multiples par l'intermédiaire de ladite interface ISUP.
